# EUROPÄISCHE PATENTANMELDUNG

(11) **EP 2 898 804 A1**
(43) Veröffentlichungstag der Anmeldung: **29.07.2015**
(21) Anmeldenummer: 15152058.2
(22) Anmeldetag: 22.01.2015
(51) Int. Cl.: A47J 31/56, A47J 31/44

(54) **Heißgetränkeautomat mit einer Füllstandsanzeige**

(30) Priorität: 23.01.2014 DE 102014100732
(71) Anmelder: Miele & Cie. KG, 33332 Gütersloh (DE)
(72) Erfinder: Heidemann, Tobias, 49328 Melle (DE)

(57) **Zusammenfassung**

Die vorliegende Erfindung betrifft einen Heißgetränkeautomaten mit zumindest einem in einem Innenraum des Heißgetränkeautomaten angeordneten Vorratsbehälter, wobei der Vorratsbehälter ein Aufnahmevolumen aufweist, welches durch eine zumindest teilweise transparent oder halbtransparent ausgebildete Wand begrenzt ist, wobei der Vorratsbehälter in einem geöffneten Zustand des Heißgetränkeautomaten durch einen Durchgriff des Heißgetränkeautomaten von außen zugänglich, und in einem geschlossenen Zustand des Heißgetränkeautomaten nicht von außen zugänglich ist, wobei die Wand des Vorratsbehälters im geöffneten Zustand des Heißgetränkeautomaten von außen sichtbar ist, und wobei im Innenraum ein Leuchtmittel angeordnet ist, welches die Wand im geöffneten Zustand des Heißgetränkeautomaten durchleuchtet, so dass das Aufnahmevolumen des Vorratsbehälters von außen einsehbar ist.

Die vorliegende Erfindung betrifft weiterhin ein Leuchtmodul für einen solchen Heißgetränkeautomaten, mit zumindest einem Leuchtmittel, das in einem Gehäuse angeordnet ist, welches zumindest teilweise lichtdurchlässig ausgebildet ist.

Die vorliegende Erfindung betrifft weiterhin einen Vorratsbehälter für einen solchen Heißgetränkeautomaten, der ein Aufnahmevolumen aufweist, welches durch eine zumindest teilweise transparent oder halbtransparent ausgebildete Wand begrenzt ist.

## Beschreibung

### Stand der Technik

Die vorliegende Erfindung betrifft einen Heißgetränkeautomaten, der mit zumindest einem in einem Innenraum des Heißgetränkeautomaten angeordneten Vorratsbehälter, wobei der Vorratsbehälter ein Aufnahmevolumen aufweist, welches durch eine zumindest teilweise transparent oder halbtransparent ausgebildete Wand begrenzt ist, wobei der Vorratsbehälter in einem geöffneten Zustand des Heißgetränkeautomaten durch einen Durchgriff des Heißgetränkeautomaten von außen zugänglich ist. Die vorliegende Erfindung betrifft weiterhin ein Leuchtmodul für einen solchen Heißgetränkeautomaten, sowie einen Vorratsbehälter für einen solchen Heißgetränkeautomaten.

In Heißgetränkeautomaten wird eine heiße Flüssigkeit wie beispielsweise Wasser oder Milch durch einen Getränkerohstoff wie beispielsweise Kaffee, Tee oder Kakao geleitet. Dabei nimmt die Flüssigkeit Partikel des Getränkerohstoffes auf und einen Geschmack des Getränkerohstoffes an. Dem so hergestellten Heißgetränk werden oftmals weitere Getränkezusätze wie beispielsweise Zucker oder Milch zugegeben. Das Heißgetränk wird anschließend in einen Kaffeebehälter, beispielsweise eine Tasse oder einen Becher, abgelassen.

Der Getränkerohstoff, die Flüssigkeit sowie die Getränkezusätze müssen in dem Heißgetränkeautomaten zugeführt, oder bevorratet und regelmäßig nachgefüllt werden. Zudem werden in solchen Heißgetränkeautomaten häufig Reinigungsmittel bevorratet, mit denen die für die Verarbeitung der Getränkebestandteile erforderlichen Leitungen des Heißgetränkeautomaten regelmäßig gereinigt werden.

Um den Füllstand der für die Bevorratung der Getränkebestandteile und/oder Reinigungsmittel erforderlichen Vorratsbehälter zu kontrollieren, ist es bekannt, Sensoren zu nutzen, die ein Unterschreiten eines Füllstandminimums anzeigen. Oder der Füllstand wird über die Anzal der Getränkebezüge/Reinigungszyklen berechnet. Einem Nutzer des Heißgetränkeautomaten wird dies beispielsweise an einem Display oder durch eine Lampe angezeigt. Da die Vorratsbehälter in der Regel nicht gleichzeitig entleert sind, müssen möglicherweise zwischen mehreren aufeinander folgenden Getränkebezügen verschiedene Vorratsbehälter befüllt werden. Das Füllen von Vorratsbehältern wird durch die Nutzer jedoch zumeist als lästig empfunden.

Für den Nutzer besteht aber die Möglichkeit, beim Füllen eines leeren Vorratsbehälters die übrigen Vorratsbehälter zu kontrollieren. Um das Aufnahmevolumen der Vorratsbehälter sehen zu können, müssen diese jedoch einzeln vollständig aus dem Heißgetränkeautomaten heraus gezogen werden, was Zeit beansprucht und ebenfalls als lästig empfunden wird.

### Offenbarung der Erfindung

Aufgabe der vorliegenden Erfindung ist es daher, eine bedienerfreundliche Füllstandskontrolle für die Vorratsbehälter eines Heißgetränkeautomaten zu schaffen, die ein einfaches und schnelles Erfassen des Füllstandes der Vorratsbehälter ermöglicht.

Die Aufgabe wird gelöst mit einem Heißgetränkeautomaten mit einem Innenraum, in dem zumindest ein Vorratsbehälter angeordnet ist. Der Vorratsbehälter ist zumindest teilweise transparent oder halbtransparent ausgebildet. Er weist ein Aufnahmevolumen auf. Vorzugsweise ist das Aufnahmevolumen durch eine zumindest teilweise transparent oder halbtransparent ausgebildete Wand begrenzt.

Der Begriff "transparent" bezeichnet hier ein Material, dass das für einen Menschen sichtbare Licht durchlässig ist. Mit dem Begriff "halbtransparent" ist hier ein in Bezug auf das für den Menschen sichtbare Licht teildurchlässiges Material bezeichnet. Auch lichtdurchlässiges, also trübes oder milchiges Material, auch translizent genannt, ist hier mit umfasst.

Der Vorratsbehälter ist in einem geöffneten Zustand des Heißgetränkeautomaten durch einen Durchgriff von außen zugänglich, und in einem geschlossenen Zustand des Heißgetränkeautomaten nicht von außen zugänglich. Die Wand des Vorratsbehälters ist im geöffneten Zustand des Heißgetränkeautomaten von außen sichtbar.

Der Heißgetränkeautomat zeichnet sich dadurch aus, dass im Innenraum des Heißgetränkeautomaten ein Leuchtmittel angeordnet ist, welches die Wand im geöffneten Zustand des Heißgetränkeautomaten durchleuchtet, so dass das Aufnahmevolumen des Vorratsbehälters von außen einsehbar ist. Dadurch wird eine im Vorratsbehälter verbliebene Substanz mit dem Leuchtmittel beleuchtet und ist für den Nutzer leichter erkennbar. Das Ablesen des Füllstandes der verbliebenen Substanz im Vorratsbehälter ist dadurch sehr leicht möglich, und zwar auch ohne den Vorratsbehälter aus dem Innenraum des Heißgetränkeautomaten entnehmen zu müssen.

Es ist bevorzugt, dass das von dem Leuchtmittel abgestrahlte Licht für das Material, aus dem der transparente oder halbtransparente Teil der Wand des Vorratsbehälters gefertigt ist, zumindest teilweise durchlässig ist.

In einer bevorzugten Ausführungsform ist der Vorratsbehälter einstückig gefertigt. Besonders bevorzugt ist er vollständig transparent oder halbtransparent ausgebildet. Dadurch beleuchtet das Leuchtmittel den gesamten Innenraum des Heißgetränkeautomaten. Um eine gute Haltbarkeit der bevorrateten Substanz sicher zu stellen, ist es bevorzugt, dass der Vorratsbehälter halbtransparent ausgebildet ist. Alternativ ist auch eine zumindest teilweise nicht transparente Ausbildung des Vorratsbehälters bevorzugt.

Das Durchleuchten des Vorratsbehälters mit dem Leuchtmittel erleichtert nicht nur das Ablesen des Füllstandes des Aufnahmevolumens, sondern bewirkt zudem schöne optische Effekte.

Weiterhin ist eine Ausführungsform bevorzugt, bei der die Wand einen transparent oder halbtransparent ausgebildeten Sichtbereich umfasst, der sich in vertikaler Richtung erstreckt. Dadurch ist der Füllstand an dem Sichtbereich des Vorratsbehälters besonders einfach ablesbar.

Der Durchgriff ist bevorzugt eine Tür, die um eine Schwenkachse schwenkbar ist. Vorzugsweise erstreckt sich die Schwenkachse in vertikaler oder horizontaler Richtung. Es ist aber ebenfalls ein Durchgriff in Form einer Klappe oder eines Deckels bevorzugt.

Um Energie einzusparen, ist es bevorzugt, dass das Leuchtmittel bei geschlossenem Durchgriff, insbesondere bei geschlossener Tür, nicht leuchtet. Um das Öffnen und Schließen des Durchgriffs zu erfassen, ist es weiterhin bevorzugt, dass der Heißgetränkeautomat einen Schaltmittel, beispielsweise einen Schalter oder einen Sensor, umfasst.

Die im Vorratsbehälter bevorratete Substanz ist bevorzugt ein Getränkebestandteil. Vorzugsweise ist sie ein Getränkerohstoff wie Kaffeepulver, Teeblätter oder Kakaopulver. Ebenfalls bevorzugt ist sie Wasser oder Milch. Weiterhin bevorzugt ist sie ein Getränkezusatz wie beispielsweise Milch oder Zucker. Als im Vorratsbehälter bevorratete Substanz ist aber auch ein Reinigungsmittel bevorzugt. Ferner ist als Vorratsbehälter auch ein Restebehälter oder Abfallbehälter anzusehen, dessen Füllstand oder das Vorhandensein von Inhalt ebenfalls mit der durchscheinenden Beleuchtung bequem erkannt werden kann.

Besonders bevorzugt umfasst der Heißgetränkeautomat mehrere Vorratsbehälter. Dabei ist es bevorzugt, dass ein oder mehrere Leuchtmittel vorgesehen sind, um die Vorratsbehälter zu durchleuchten.

In einer besonders bevorzugten Ausführungsform ist für jeden Vorratsbehälter zumindest ein Leuchtmittel vorgesehen. Ganz besonders bevorzugt sind für jeden Vorratsbehälter mehrere Leuchtmittel vorgesehen. Durch die mehreren Leuchtmittel ist der Füllstand auch noch bei Ausfall eines einzelnen Leuchtmittels leicht ablesbar. Die für einen Vorratsbehälter vorgesehenen mehreren Leuchtmittel sind bevorzugt übereinander angeordnet, insbesondere reihenweise. Um besondere optische Effekte zu bewirken, ist aber auch eine zueinaner versetzte Anordnung oder eine Anordnung in einem Muster bevorzugt. Die elektrischen Leuchtmittel können dabei in Reihe geschaltet sein, was einen geringen Verdrahtungsaufand erfordert. In einer anderen Ausführung sind die Leuchtmittel parallel geschaltet, sodass bei Ausfall eines Leuchtmittels die verbleibenden intakten Leuchtmittel weiterhin aktiviert werden können und ein Totalausrall des betreffenden Beleuchtungseinheit vermieden wird.

Die Leuchtmittel sind bevorzugt Leuchtdioden. Es sind aber auch andere Lampen oder Leuchtmittel bevorzugt.

In einer bevorzugten Ausführungsform sind die Leuchtmittel in einer Blickrichtung des Nutzers seitlich dem Vorratsbehälter angeordnet. Es ist aber auch eine Durchleuchtung von hinten, von oben oder von unten aus bevorzugt. Weiterhin ist auch eine Anordnung des Leuchtmittels am Vorratsbehälter bevorzugt.

Um ein füssigkeitsdichtes Abschirmen des Leuchtmittels oder der Leuchtmittel vom Innenraum des Heißgetränkeautomaten zu bewirken, ist es weiterhin bevorzugt, dass das Leuchtmittel oder die Leuchtmittel in einem Innenraum eines, insbesondere geschlossenen, Leuchtmittelgehäuses angeordnet sind, das zumindest teilweise transparent oder halbtransparent ausgebildet ist. Vorzugsweise weist das Leuchtmittelgehäuse eine einem der Vorratsbehälter zugewandte Wand auf, die zumindest teilweise transparent oder halbtransparent ausgebildet. Um das Leuchtmodul auch bei einem defekten Leuchtmittel weiterhin verwenden zu können, ist es weiterhin bevorzugt, dass das Leuchtmittel oder die Leuchtmittel dem Leuchtmittelgehäuse entnehmbar sind.

Besonders bevorzugt sind das Leuchtmittelgehäuse mit dem Leuchtmittel oder den Leuchtmitteln als modulare Baugruppe gefertigt. Eine solche, im Folgenden als Leuchtmodul bezeichnete, modulare Baugruppe ist unabhängig vom Heißgetränkeautomaten herstellbar, leicht montierbar und leicht austauschbar.

Das Leuchtmodul ist bevorzugt an oder in einer Gehäuseinnenwand im Innenraum des Heißgetränkeautomaten befestigt. Besonders bevorzugt ist es an einer Gehäuseinnenwand verrastet oder in eine Gehäuseinnenwand eingeschoben. Zum Einschieben des Leuchtmoduls in die Gehäuseinnenwand weist diese bevorzugt eine Aussparung auf. In dieser Ausführungsform ist es weiterhin bevorzugt, dass zwischen der Gehäuseinnenwand und dem Leuchtmodul eine Dichtlippe vorgesehen ist, die ein Eindringen von Feuchtigkeit in die Aussparung verhindert.

Die Aufgabe wird weiterhin gelöst mit einem Leuchtmodul, insbesondere für einen erfindungsgemäßen Heißgetränkeautomaten, das ein Leuchtmittelgehäuse umfasst, in dem ein oder mehrere Leuchtmittel, insbesondere Leuchtdioden, angeordnet sind, wobei zumindest eine Gehäusewand zumindest teilweise transparent oder halbtransparent ausgebildet ist. Es ist bevorzugt, dass das Leuchtmittel, oder die mehreren Leuchtmittel, dem Leuchtmodul entnehmbar ist oder sind. Dadurch sind einerseits das oder die Leuchtmittel austauschbar. Andererseits ist das Leuchtmodul leicht montierbar und austauschbar.

Die modulare Fertigung hat zudem den Vorteil, dass sie kostengünstig und unabhängig vom Standort möglich ist.

Die Aufgabe wird weiterhin gelöst mit einem Vorratsbehälter für einen solchen Heißgetränkeautomaten. Der Vorratsbehälter weist ein Aufnahmevolumen auf, welches durch eine zumindest teilweise transparent oder halbtransparent ausgebildete Wand begrenzt ist. Dafür ist die Wand bevorzugt aus einem Kunststoff gefertigt. Es ist aber auch eine Fertigung aus einem Plexiglas oder Glas bevorzugt.

Besonders bevorzugt ist der Vorratsbehälter einstückig gefertigt, insbesondere aus dem Kunststoff, Plexiglas oder Glas. In dieser Ausführungsform ist er vorzugsweie vollständig transparent oder halbtransparent ausgebildet.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: einen erfindungsgemäßen Heißgetränkeautomaten im geschlossenen Zustand,
- Fig. 2: den Heißgetränkeautomaten der Fig. 1 im geöffneten Zustand,
- Fig. 3: in (a) und (b) jeweils verschiedene Ausführungsformen eines solchen Heißgetränkeautomaten,
- Fig. 4: ein Leuchtmodul für den Heißgetränkeautomaten der Fig. 3 (b), und
- Fig. 5: einen Vorratsbehälter für einen solchen Heißgetränkeautomaten.

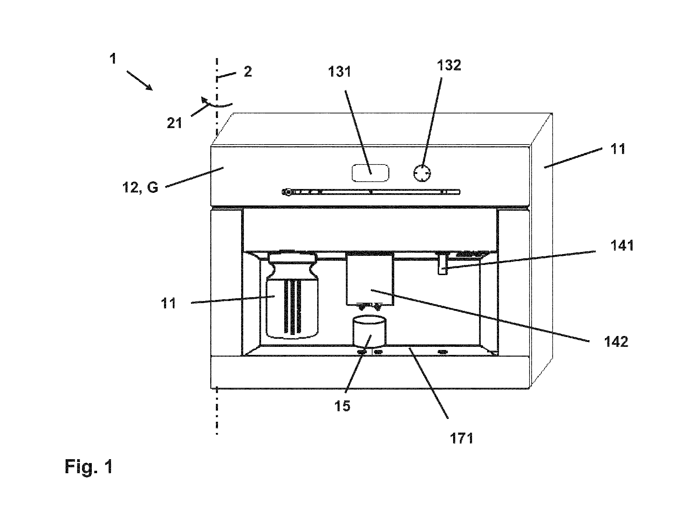

Der in der der Fig. 1 dargestellte Heißgetränkeautomat 1 ist ein Kaffeeautomat beziehungsweise ein Kaffeevollautomat, mit dem als Heißgetränk verschiedene Sorten Kaffee herstellbar sind. Die Erfindung ist auch auf andere Heißgetränkeautomaten 1 anwendbar, beispielsweise auf einen Teeautomaten, einen Kakaoautomaten oder Kombinationen solcher Automaten. Im Rahmen dieser Beschreibung werden aber die Begriffe Heißgetränkeautomat 1 und Kaffeeautomat, sowie die Begriffe Heißgetränk und Kaffee synonym verwendet.

Ein solcher Kaffeeautomat 1 weist zumindest einen Vorratsbehälter 163 für einen Getränkerohstoff, hier einen Kaffeebehälter für Kaffeebohnen (nicht gezeigt), auf. Weiterhin weist ein solcher Kaffeeautomat 1 einen Satzbehälter 161 für den Kaffeesatz (nicht gezeigt) auf, der hier ebenfalls als Vorratsbehälter bezeichnet ist. Zudem weist der Kaffeeautomat 1 einen Vorratsbehälter 162 für die Getränkeflüssigkeit, hier für Wasser (nicht gezeigt), auf. Der in Fig. 1 dargestellte Kaffeeautomat 1 weist außerdem noch einen weiteren Vorratsbehälter 164 für ein Reinigungsmittel (nicht gezeigt) auf.

Der Kaffeeautomat 1 weist einen Getränkeauslass 142 auf, durch die der Kaffee in einen Aufnahmebehälter 15 wie beispielsweise eine Tasse oder einen Becher geleitet wird. Der Aufnahmebehälter 15 wird dafür auf einem Abtropfgitter 171 abgestellt, das oberhalb einer Abtropfschale 17 angeordnet ist. Die Abtropfschale 17 ist zum Auffangen von Wasser und/oder Heißgetränk vorgesehen. Zudem weist der Kaffeeautomat 1 einen Dampfauslass 141 auf. Weiterhin weist er einen Milchbehälter 11 auf, der zu Auschäumen von Milch (nicht gezeigt) vorgesehen ist.

Zum Aufbrühen eines Kaffees wird erwärmtes Wasser in einem Brühvorgang über Wasserzuleitungen (nicht gezeigt) in eine Brühkammer (nicht gezeigt) geleitet. Der in den Wasserzuleitungen herrschende Druck kann über den Dampfauslass 141 reguliert werden. In der Brühkammer wird das Wasser durch die gemahlenen Kaffeebohnen geleitet und der Kaffee dadurch aufgebrüht. Das heiße Wasser nimmt dabei Partikel der gemahlenen Kaffeebohnen auf und ihren Geschmack an. Durch den Getränkeauslass 142 wird der Kaffee anschließend in den Aufnahmebehälter 15 ausgelassen. Der Kaffeesatz wird anschließend in den Satzbehälter 161 entleert.

Um verschiedene Kaffeegetränke herstellen zu können, sind beispielsweise die zugeführte Menge Wasser, die Temperatur, auf die das Wasser aufgeheizt wird, die Feinheit, mit der die Kaffeebohnen gemahlen werden, die Brühzeit und/oder der Brühdruck, mit dem das Wasser durch die gemahlenen Kaffeebohnen geführt wird, einstellbar. Oder es ist die Anzahl der in einem Brühvorgang aufgebrühten Tassen einstellbar. Dafür weist der in der Fig. 1 gezeigte Kaffeeautomat 1 einen Auswahldrehknopf 132 für den Bediener auf, mit dem dieser die Einstellungen vornehmen kann, sowie ein Display 131 zum Anzeigen der gewählten Einstellungen.

Fig. 1 zeigt den Kaffeeautomaten 1 in geschlossenem Zustand G. Der Kaffeeautomat 1 weist ein Automatengehäuse 11 auf, das einen Innenraum 10 begrenzt. Der Innenraum 10 des Kaffeeautomaten 1 ist hier durch einen als Tür ausgebildeten Durchgriff 12 zugänglich. Im Folgenden werden die Begriffe Durchgriff 12 und Tür synonym verwendet. Die Tür 12 ist um eine Schwenkachse 2 in und gegen eine Schwenkrichtung 21 schwenkbar.

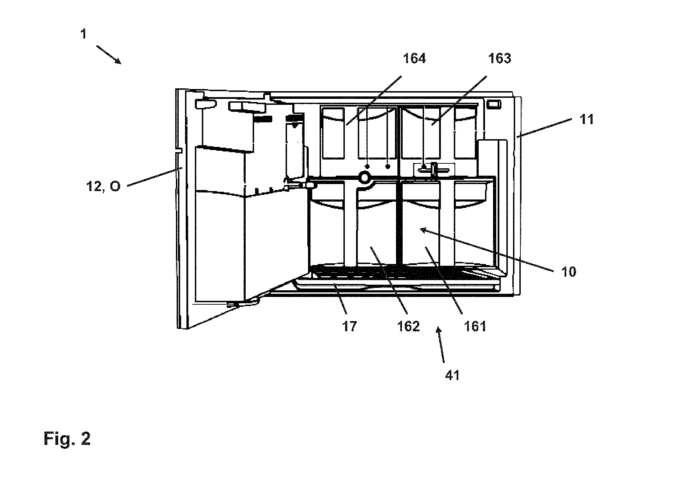

Fig. 2 zeigt den Kaffeeautomaten 1 in geöffnetem Zustand O. Die Tür 12 ist dabei um die Schwenkachse 2 in Schwenkrichtung 21 verschwenkt. Dadurch ist der Innenraum 10 des Kaffeeautomaten 1 einsehbar. Sichtbar sind die im Innenraum 10 angeordneten Vorratsbehälter 161 - 164 und die Abtropfschale 17.

Erfindungsgemäß weist der Kaffeeautomat 1 Leuchtmittel 31 auf, die die Vorratsbehälter 161 - 164 im geöffneten Zustand O des Kaffeeautomaten 1, also bei geöffneter Tür 12, durchleuchten. Dafür weist der Kaffeeautomat 1 ein Schaltmittel (nicht gezeigt) auf, beispielsweise einen Sensor oder einen Schalter. Das Schaltmittel erfasst ein Verschwenken der Tür 12 vom geschlossenen Zustand G in den geöffneten Zustand O und vom geöffneten Zustand O in den geschlossenen Zustand G.

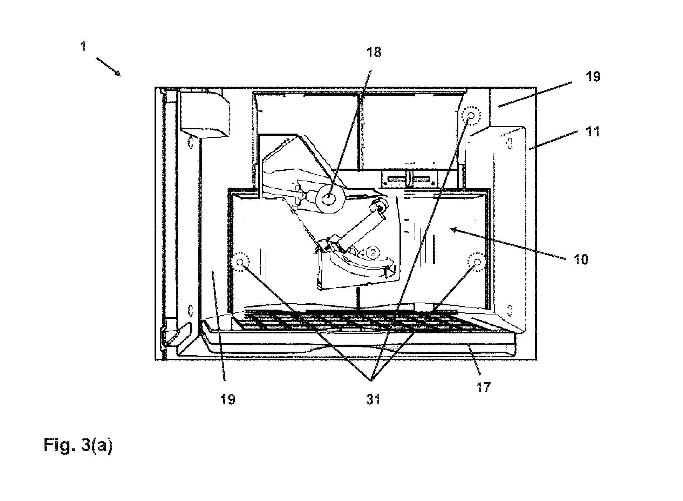

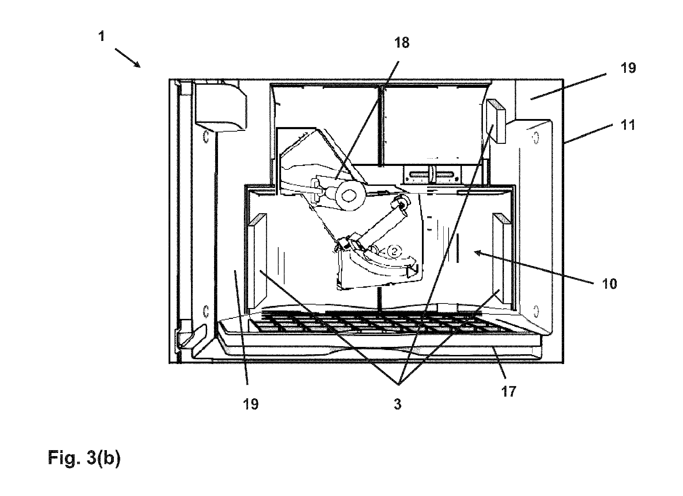

Die Fig. 3 (a) und (b) zeigen den Innenraum 10 verschiedener Ausführungsformen eines solchen Heißgetränkeautomaten 1 ohne Vorratsbehälter 161 - 164. Dadurch sind die im Heißgetränkeautomaten 1 angeordneten Leuchtmittel 31 sichtbar. Sofern im Innenraum 10 keine Vorratsbehälter 161 - 164 angeordnet sind, ist die Brüheinheit 18 für einen Bediener zu Wartungszwecken bzw. zum Entfernen und zum Reinigen zugänglich.

Die beiden Heißgeränkeautomaten 1 unterscheiden sich durch die Anordnung Ihrer Leuchtmittel 31.

Bei der Ausführungsform der Fig. 3 (a) sind die Leuchtmittel 31 in Innenwände 19 des Heißgetränkeautomaten 1 eingesetzt/eingelassen. Im Gegensatz dazu weist der Heißgetränkeautomat 1 der Ausführungsform der Fig. 3 (b) Leuchtmodule 3 auf, die an den Innenwänden 19 angeordnet sind. Bei beiden Ausführungsformen sind jeweils drei der Vorratsbehälter 161 - 163 mit jeweils einem Leuchtmittel 31 oder einem Leuchtmodul 3 durchleuchtbar. Die Leuchtmittel 31 sind aufgrund ihres geringen Stromverbrauchs bevorzugt Leuchtdioden. Es sind aber auch andere Lampen oder Leuchtmittel verwendbar.

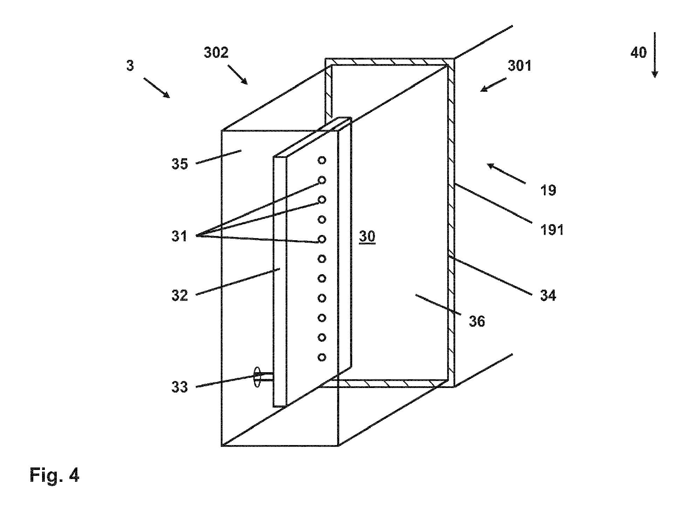

Es ist auch ein Einschieben der Leuchtmodule 3 in Aussparungen 191 der Innenwände 19 bevorzugt. Dies zeigt die Fig. 4 schematisch.

Bei allen Ausführungsformen ist es bevorzugt, dass die elektrischen Anschlüsse 33 für die im Heißgetränkeautomaten 1 montierten Leuchtmittel 31 in einem zwischen dem Automatengehäuse 11 und den Innenwänden 19 angeordneten Zwischenraum (nicht gezeigt) angeordnet sind.

Fig. 4 zeigt ein teilweise in die Innenwand 19 eingeschobenes Leuchtmodul 3. Das Leuchtmodul 3 weist ein Leuchtmittelgehäuse 35 auf, in dessen Innenraum 30 mehrere Leuchtmittel 31 in einer Reihe übereinander angeordnet sind. Die Lichtmittel 31 sind an einer elektrischen Leiterplatte 32 angeordnet. Das Leuchtmittelgehäuse 35 weist eine Wand 36 auf, die transparent ausgebildet ist, so dass die Leuchtmittel 31 die Wand 36 durchleuchten. Die Wand 36 ist bei im Heißgetränkeautomaten 1 montierten Leuchtmodul 3 an einer dem Vorratsbehälter 161 - 164 zugewandten Seite 301 angeordnet.

Die elektrischen Anschlüsse 33 sind bei dem hier dargestellten Leuchtmodul 3 an einer Rückwand 102 des Leuchtmittelgehäuses 35 nach außen geführt. Bevorzugt weist das Leuchtmodul 3 einen elektrischen Anschlussstecker (nicht gezeigt) zum Verbinden der Leuchtmittel 31 mit einer elektrischen Spannungsversorgung (nicht gezeigt) auf.

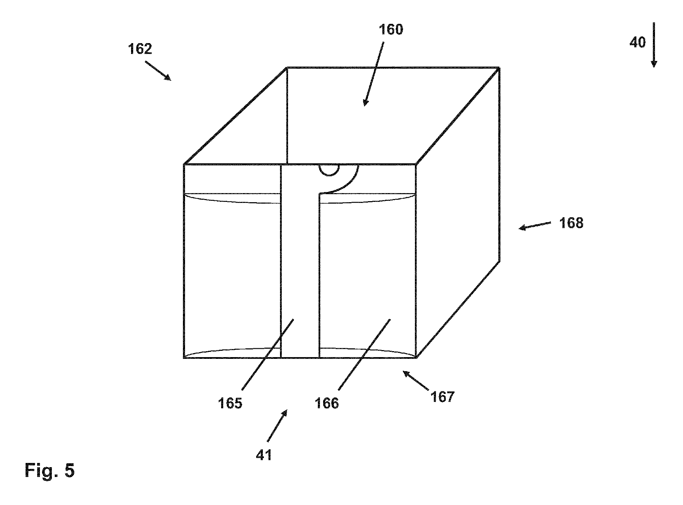

Fig. 5 zeigt beispielhaft einen Vorratsbehälter 162 für einen solchen Heißgetränkeautomaten 1. Der Vorratsbehälter 162 weist einen Aufnahmeraum 160 auf, der zur Aufnahme einer im Heißgetränkeautomaten 1 benötigten Substanz (nicht gezeigt) vorgesehen ist, beispielsweise für einen Getränkerohstoff, einen Getränkezusatz oder ein Reinigungsmittel. Der Vorratsbehälter 162 weist eine Frontseite 166 auf, an der ein Griff 165 angeordnet ist. Die Frontseite 166 ist im Heißgetränkeautomaten 1 die dem Bediener zugewandte Seite 167.

Der Vorratsbehälter 162 ist einstückig gefertigt. Er ist aus einem Kunststoff hergestellt. Zumindest seine Frontseite 166 ist halbtransparent ausgebildet.

Beim Öffnen des Heißgetränkeautomaten 1 werden die Vorratsbehälter 161 - 164 mit den Leuchtmitteln 31 durchleuchtet. Dadurch ist die in Ihnen bevorratete Substanz für den Bediener leicht erkennbar. Beispielsweie bei einem ohnehin erforderlichen Nachfüllen/Reinigen eines der Vorratsbehälter 161 - 164 kann der Bediener daher den Füllstand der übrigen Vorratsbehälter 161 - 164 prüfen, ohne diese dem Heißgetränkeautomaten 1 aufwändig entnehmen zu müssen.

### Bezugszeichenliste

- 1: Heißgetränkeautomat, Kaffeeautomat, Kaffeevollautomat
- 10: Innenraum
- 11: Automatengehäuse
- 12: Tür
- 131: Anzeigemittel, Display
- 132: Bedienmittel, Drehschalter
- 141: Dampfablass
- 142: Getränkeauslass
- 15: Aufnahmebehälter
- 160: Aufnahmevolumen
- 161: Vorratsbehälter, Wassertank
- 162: Vorratsbehälter, Satzbehälter
- 163: Vorratsbehälter, Getränkerohstoffbehälter, Kaffeebohnenbehälter
- 164: Vorratsbehälter, Getränkezusatzbehälter
- 165: Griff
- 166: Frontseite
- 167: Dem Bediener zugewandte Seite
- 168: Dem Bediener abgewandte Seite
- 17: Abtropfschale
- 171: Abtropfgitter
- 18: Brüheinheit
- 19: Gehäuseinnenwand
- 191: Aussparung
- 2: Schwenkachse
- 21: Schwenkrichtung
- 3: Leuchtmodul
- 30: Gehäuseinnenraum
- 301: Dem Vorratsbehälter zugewandte Seite
- 302: Rückwand
- 31: Leuchtmittel, LED (Leuchtdiode)
- 32: Leiterplatte, Platine
- 33: Elektrische Anschlussmittel, Steckanschluss, Stecker
- 34: Dichtmittel, Dichtlippe
- 35: Leuchtmittelgehäuse
- 36: lichtdurchlässig ausgebildete Wand
- 4: Vertikale Richtung
- O: Offen
- G: Geschlossen

## Patentansprüche

1. Heißgetränkeautomat (1) mit zumindest einem in einem Innenraum (10) des Heißgetränkeautomaten (1) angeordneten Vorratsbehälter (161 - 164), wobei der Vorratsbehälter (161 - 164) ein Aufnahmevolumen (160) aufweist, welches durch eine zumindest teilweise transparent oder halbtransparent ausgebildete Wand (166) begrenzt ist, wobei der Vorratsbehälter (161 - -164) in einem geöffneten Zustand (O) des Heißgetränkeautomaten (1) durch einen Durchgriff (12) des Heißgetränkeautomaten (1) von außen zugänglich, und in einem geschlossenen Zustand (G) des Heißgetränkeautomaten (1) nicht von außen zugänglich ist, und wobei die Wand (166) des Vorratsbehälters (161 - 164) im geöffneten Zustand (O) des Heißgetränkeautomaten (1) von außen sichtbar ist,
**dadurch gekennzeichnet, dass**
im Innenraum (10) ein Leuchtmittel (31) angeordnet ist, welches die Wand (166) im geöffneten Zustand (O) des Heißgetränkeautomaten (1) durchleuchtet, so dass das Aufnahmevolumen (160) des Vorratsbehälters (161 - 164) von außen einsehbar ist.

2. Heißgetränkeautomat (1) nach Anspruch 1, **dadurch gekennzeichnet, dass** mehrere Vorratsbehälter (161 - 164) umfasst, wobei zumindest ein oder mehrere Leuchtmittel (31) vorgesehen sind, um die Aufnahmevolumen (160) der Vorratsbehälter (161 - 164) im geöffneten Zustand (O) des Heißgetränkeautomaten (1) zu durchleuchten.

3. Heißgetränkeautomat (1) nach einem der vorherigen Ansprüche, **dadurch gekennzeichnet, dass** für jeden Vorratsbehälter (161 - 164) zumindest ein Leuchtmittel (31) vorgesehen ist.

4. Heißgetränkeautomat (1) nach einem der vorherigen Ansprüche, **dadurch gekennzeichnet, dass** das Leuchtmittel (31) eine Leuchtdiode ist.

5. Heißgetränkeautomat (1) nach einem der vorherigen Ansprüche, **dadurch gekennzeichnet, dass** er für jeden Vorratsbehälter (161 - 164) mehrere übereinander angeordnete Leuchtmittel (31) umfasst.

6. Heißgetränkeautomat (1) nach einem der vorherigen Ansprüche, **dadurch gekennzeichnet, dass** er ein Leuchtmodul (3) umfasst, mit einem Leuchtmodulgehäuse (35), das zumindest teilweise transparent oder halbtransparent ausgebildet ist, wobei das Leuchtmittel (31) oder die Leuchtmittel (31) in einem Gehäuseinnenraum (30) des Leuchtmodulgehäuse (35) angeordnet ist oder sind.

7. Heißgetränkeautomat (1) nach einem der vorherigen Ansprüche, **dadurch gekennzeichnet, dass** das Leuchtmodulgehäuse (35) an einer einem der Vorratsbehälter (161 - 164) zugewandten Seite (301) zumindest teilweise transparent oder halbtransparent ausgebildet ist.

8. Heißgetränkeautomat (1) nach einem der vorherigen Ansprüche, **dadurch gekennzeichnet, dass** das Leuchtmodul (3) an oder in einer Gehäuseinnenwand (19) des Heißgetränkeautomaten (1) angeordnet ist.

9. Heißgetränkeautomat (1) nach einem der vorherigen Ansprüche, **dadurch gekennzeichnet, dass** das Leuchtmodul (3) in eine Aussparung (191) der Gehäuseinnenwand (19) eingeschoben ist.

10. Heißgetränkeautomat (1) nach Anspruch 9, **dadurch gekennzeichnet, dass** zwischen dem Leuchtmodul (3) und der Gehäuseinnenwand (19) ein Dichtmittel (34), insbesondere eine Dichtlippe, vorgesehen ist.

11. Heißgetränkeautomat (1) nach einem der vorherigen Ansprüche, **dadurch gekennzeichnet, dass** der Durchgriff (12) eine Tür oder eine Klappe ist, die um eine Schwenkachse (2) schwenkbar ist.

12. Heißgetränkeautomat (1) nach einem der vorherigen Ansprüche, **dadurch gekennzeichnet, dass** er Schaltmittel, insbesondere einen Schalter oder einen Sensor, umfasst, mit dem das Öffnen und Schließen des Durchgriffs (12) erfassbar ist.

13. Leuchtmodul (3) für einen Heißgetränkeautomaten (1) nach einem der vorherigen Ansprüche, mit zumindest einem Leuchtmittel (31), das in einem Leuchtmittelgehäuse (35) angeordnet ist, welches zumindest teilweise transparent oder halbtransparent ausgebildet ist.

14. Leuchtmodul (3) nach Anspruch 13, **dadurch gekennzeichnet, dass** es mehrere übereinander angeordnete Leuchtmittel (31) aufweist.

15. Leuchtmodul (3) nach einem der Ansprüche 13 - 14, **dadurch gekennzeichnet, dass** das Leuchtmittelgehäuse (35) eine transparent oder halbtransparent ausgebildete Wand (36) aufweist.

16. Vorratsbehälter (161 - 164) für einen Heißgetränkeautomaten (1) nach einem der Ansprüche 1 - 12, der einen Aufnahmeraum (160) aufweist, welcher durch eine zumindest teilweise transparent oder halbtransparent ausgebildete Wand (166) begrenzt ist.
